# EUROPÄISCHE PATENTANMELDUNG

(11) **EP 3 450 236 A1**
(43) Veröffentlichungstag der Anmeldung: **06.03.2019**
(21) Anmeldenummer: 18188229.1
(22) Anmeldetag: 09.08.2018
(51) Int. Cl.: B60K 6/42

(54) **EINSATZ- ODER NUTZFAHRZEUG FÜR EIN RÄUMLICH BEGRENZTES EINSATZGEBIET**

(30) Priorität: 23.08.2017 DE 102017119256
(71) Anmelder: Fraport AG Frankfurt Airport Services Worldwide, 60547 Frankfurt am Main (DE)
(72) Erfinder: Metzler, Markus, 63607 Wächtersbach (DE)
(74) Vertreter: Prinz & Partner mbB

(57) **Zusammenfassung**

Ein Einsatz- oder Nutzfahrzeug für ein räumlich begrenztes Einsatzgebiet umfasst wenigstens einen Elektromotor (26) zum Antreiben des Fahrzeugs, wenigstens einen Akkumulator (30) zur Bereitstellung von elektrischer Energie für den Elektromotor (26) und wenigstens einen Verbrennungsmotor (32), insbesondere einen Dieselmotor, zum Antreiben wenigstens einer dem Einsatz- oder Nutzfahrzeug zugeordneten Arbeitsmaschine (34). Der Verbrennungsmotor (32) ist auch zum Aufladen des Akkumulators (30) eingerichtet.

## Beschreibung

Die Erfindung betrifft ein Einsatz- oder Nutzfahrzeug für ein räumlich begrenztes Einsatzgebiet, insbesondere ein Flughafenlöschfahrzeug.

Unter einem "Einsatz- oder Nutzfahrzeug für ein räumlich begrenztes Einsatzgebiet" ist ein Fahrzeug zu verstehen, das nur innerhalb eines festgelegten Bereichs bestimmungsgemäß eingesetzt wird, wie etwa auf einem Flughafen oder auf einem Gelände eines Industriebetriebs.

Ein Flughafenbetreiber muss zur Sicherstellung des Brandschutzes gemäß den gesetzlichen Vorgaben basierend auf dem internationalen Abkommen ICAO (Internationale Zivilluftfahrtorganisation) bzw. innerhalb der EU gemäß den Vorgaben der Europäischen Agentur für Flugsicherheit (EASA) eine ausreichende Anzahl von Flughafenlöschfahrzeugen bereitstellen.

Typische Flughafenlöschfahrzeuge verfügen heute über einen oder zwei leistungsstarke Dieselmotoren, die in Abhängigkeit vom Baujahr unterschiedliche Abgas-Normen erfüllen. Von diesen Antriebsmotoren erfolgt die Kraftübertragung über ein bzw. zwei Automatikgetriebe zu einem Sammelgetriebe, von dem aus die Achsen des Fahrzeugs angetrieben werden. Ein weiterer, etwas schwächer ausgelegter Dieselmotor sorgt üblicherweise für den Antrieb einer auf dem Fahrzeug montierten Feuerlöschkreiselpumpe.

Solche Fahrzeuge haben einige Nachteile, die nachfolgend kurz skizziert werden.

Das Grundgewicht des Fahrgestelles eines typischen Flughafenlöschfahrzeugs liegt im Bereich von etwa 20 Tonnen. Aus unterschiedlichen technischen Gründen, wie etwa Gewicht, verfügbarer Platz, technische Anforderungen an die Abgastechnik, Kühlluft und Ansaugluft, werden der bzw. die die Antriebsmotoren und das bzw. die die Automatikgetriebe im Heck des Fahrzeugs eingebaut, was - insbesondere nach der Abgabe des Löschmittels (Wasser) - zu einem ungünstigen Schwerpunkt des Fahrzeugs am Heck führt.

Allgemein ist der Wartungsumfang und -aufwand für die heutige Motoren- und Getriebetechnik sehr umfangreich und kostenintensiv.

Um eine schnelle Einsatzverfügbarkeit eines Flughafenlöschfahrzeugs zu gewährleisten, ist es erforderlich die Dieselmotoren ständig vorzuwärmen. Hierfür ist eine elektrische Zusatzheizung an den Dieselmotoren mit einer Energieaufnahme von mehreren Kilowatt pro Antriebsmotor vorgesehen. Der diesbezügliche Instandhaltungsaufwand ist entsprechend hoch.

Sämtliche Fahrzeughallen, in denen Flughafenlöschfahrzeuge einsatzbereit abgestellt werden, benötigen heute eine aufwendige Abgasabsauganlage, um die beim Starten der Antriebsmotoren entstehenden Abgase mit Dieselruß abzuführen.

Aufgabe der Erfindung ist es, die oben aufgeführten Nachteile möglichst zu vermeiden und neben der Verringerung oder Vermeidung von Emissionen die Wirtschaftlichkeit von Einsatz- oder Nutzfahrzeugen, die in einem räumlich begrenzten Gebiet eingesetzt werden, zu verbessern.

Gelöst wird diese Aufgabe durch ein Einsatz- oder Nutzfahrzeug mit den Merkmalen des Anspruchs 1. Vorteilhafte und zweckmäßige Ausgestaltungen des erfindungsgemäßen Einsatz- oder Nutzfahrzeugs sind in den Unteransprüchen angegeben.

Das erfindungsgemäße Einsatz- oder Nutzfahrzeug für ein räumlich begrenztes Einsatzgebiet umfasst wenigstens einen Elektromotor zum Antreiben des Fahrzeugs, wenigstens einen Akkumulator zur Bereitstellung von elektrischer Energie für den Elektromotor und wenigstens einen Verbrennungsmotor, insbesondere einen Dieselmotor, zum Antreiben wenigstens einer dem Einsatz- oder Nutzfahrzeug zugeordneten Arbeitsmaschine. Gemäß der Erfindung ist der Verbrennungsmotor auch zum Aufladen des Akkumulators eingerichtet.

Gemäß einer bevorzugten Anwendung der Erfindung ist das Einsatz- oder Nutzfahrzeug ein Flughafenlöschfahrzeug, und die von dem Verbrennungsmotor angetriebene Arbeitsmaschine ist eine Feuerlöschkreiselpumpe.

Die Erfindung beruht auf der Erkenntnis, dass die volle Antriebsleistung eines Einsatz- oder Nutzfahrzeuges bei einem räumlich begrenzten Einsatzgebiet nur für eine kurze Zeitdauer benötigt wird. Beispielsweise ist selbst auf einem Großflughafen die maximale Entfernung zu einem Einsatzort nicht größer als wenige Kilometer und kann somit innerhalb von wenigen Minuten zurückgelegt werden. Für die schnelle Überwindung solcher Kurzstrecken sind Verbrennungsmotoren, insbesondere Dieselmotoren, aufgrund der eingangs erläuterten Einschränkungen besonders ungeeignet. Dies betrifft jedoch nicht den weiteren Verbrennungsmotor, der nicht für den Antrieb des Fahrzeugs, sondern für den Antrieb der dem Fahrzeug zugeordneten Arbeitsmaschine vorgesehen ist.

Basierend auf dieser Erkenntnis verknüpft die Erfindung in geschickter und relativ problemlos umsetzbarer Weise vorhandene Technik von herkömmlichen Einsatz- oder Nutzfahrzeugen mit moderner Steuerung und Elektroantriebstechnik. Besonders hervorzuheben ist hierbei die Doppelnutzung des neben den Elektro-Antriebsmotoren zusätzlich vorhandenen Verbrennungsmotors. Dessen primäre Funktion ist der Antrieb einer dem Einsatz- oder Nutzfahrzeug zugeordneten Arbeitsmaschine, wie etwa einer Feuerlöschkreiselpumpe im Falle eines Flughafenlöschfahrzeugs. Zusätzlich ist der Verbrennungsmotor dafür nutzbar, die Akkumulatoren für die Elektro-Antriebsmotoren des erfindungsgemäßen Einsatz- oder Nutzfahrzeug aufzuladen.

Die Erfindung zielt insbesondere auf Fahrzeuge ab, deren Hauptzweck nicht nur der Transport von Personen oder Gütern ist, sondern die darüber hinaus mithilfe der vom Verbrennungsmotor angetriebenen Arbeitsmaschine eine weitere energieverbrauchende Funktion ausüben. Neben den bereits erwähnten Flughafenlöschfahrzeugen kommen u. a. Kühlfahrzeuge, Betonmischer, selbstfahrende Baumaschinen (auf der Straße und auf der Schiene) in Betracht.

Nachfolgend werden einige wesentliche Vorteile der Erfindung kurz erläutert.

Die großen und teuren Verbrennungsmotoren (in der Regel Dieselmotoren) eines herkömmlichen Einsatz- oder Nutzfahrzeugs und deren aufwendige Wartung entfallen.

Ein permanentes Vorwärmen der Antriebsmotoren ist nicht mehr erforderlich. Der damit verbundene technische Aufwand und Stromverbrauch entfällt.

Ebenso entfallen am erfindungsgemäßen Einsatz- bzw. Nutzfahrzeug die anfälligen und teuren Automatikgetriebe und die Ansaug- und Abgastechnik.

Die Elektro-Antriebsmotoren ermöglichen aufgrund ihrer Leistungsfähigkeit hohe Beschleunigungswerte und Höchstgeschwindigkeiten. Die Reichweite ist bei einem Fahrzeug mit räumlich begrenztem Einsatzgebiet von untergeordneter Bedeutung.

Wie bereits angedeutet können im Übrigen die vorhandenen Technologien bzw. Komponenten des Einsatz- oder Nutzfahrzeuges weiter genutzt werden, insbesondere hinsichtlich des Fahrgestells. Für die Umsetzung der Erfindung ist also keine grundlegende Neukonzeption eines Einsatz- oder Nutzfahrzeugs erforderlich. Vielmehr kann die Mehrzahl vorhandener Baugruppen weitestgehend unverändert übernommen werden.

Insgesamt reduzieren sich die Wartungsintervalle und der Wartungsaufwand.

Im Gegensatz zu den wenigen bislang realisierten reinen Elektronutzfahrzeugen ist es dank des "kleinen" Verbrennungsmotors für den Antrieb der Arbeitsmaschine nicht notwendig, andere Aggregate des Fahrzeuges umzurüsten (insbesondere Lenkung, Bremsanlage, Beleuchtung).

Der Kraftstofftank des erfindungsgemäßen Einsatz- oder Nutzfahrzeugs kann vergleichsweise klein ausfallen, da die Antriebsmotoren keinen Kraftstoff benötigen und somit nur der zusätzliche Verbrennungsmotor versorgt werden muss.

Die Abgasabsauganlage in einer Fahrzeughalle kann schrittweise entfallen. Je mehr Einsatz- oder Nutzfahrzeuge einer Flotte, die in einer Fahrzeughalle untergebracht ist, auf die erfindungsgemäße Technik umgerüstet werden, desto weniger Abgase müssen abgesaugt werden. Bei vollständiger Umrüstung oder Neuanschaffung kann die gesamte Abgasabsauganlage und deren Instandhaltung eingespart werden.

Die für das Aufladen der Akkumulatoren notwendige Stromversorgung ist in den heutigen Fahrzeughallen in der Regel bereits vorhanden.

Gemäß einer besonderen Ausführungsform des erfindungsgemäßen Einsatz- oder Nutzfahrzeugs werden mehrere, vorzugsweise alle, Achsen des Fahrzeugs jeweils von einem Elektromotor angetrieben. Dadurch wird ein direkter, gleichmäßiger Kraftschluss an allen angetriebenen Achsen erreicht. Das Vorsehen mehrerer Elektromotoren erlaubt es, bautechnisch kleine Elektromotoren zu verwenden, die in Summe kostengünstiger als etwa ein einziger großer Elektromotor sein können (zumindest unter Berücksichtigung aller jeweils in Bezug auf den bzw. die Elektromotor(en) erforderlichen Komponenten), da auf etablierte Serienelektromotoren und -zubehör zurückgegriffen werden kann. Außerdem gestalten sich die Montage und die Wartung bestehender Teilkomponenten einfach. Ein weiterer Vorteil dieser Ausführungsform ist die hohe Ausfallsicherheit. Der Verlust des Antriebsmoments eines einzelnen Elektromotors kann durch die anderen Elektromotoren soweit kompensiert werden, dass zumindest ein eingeschränkter Fahrbetrieb gewährleistet ist.

Vorzugsweise sind die Elektromotoren jeweils an einem Achskörper oder in unmittelbarer Nähe des Achskörpers montiert. Dadurch ergibt sich eine sehr günstige, ausgeglichene Gewichtsverteilung, auch im Hinblick auf eine angestrebte mittige und niedrige Schwerpunktlage. Außerdem sind die Wege für die Übertragung der Drehmomente auf die Achsen sehr kurz.

Gemäß einem besonderen Aspekt der Erfindung ist an die Achskörper jeweils ein Vorgelege montiert, und die Elektromotoren sind jeweils an das Vorgelege gekoppelt. Die Vorgelege erlauben eine Anpassung der Drehzahl und des Drehmoments an verschiedene Fahrbedingungen, insbesondere die normale Fahrt auf ebenen Straßen und die Bergauf-Fahrt oder die Fahrt im weglosen Gelände.

Beispielsweise können die Vorgelege jeweils wahlweise ein erstes Übersetzungsverhältnis von etwa 3,5 ± 1 für die Bergauf-Fahrt und ein zweites Übersetzungsverhältnis von etwa 1 ± 0,5 für die normale Fahrt bereitstellen. (Das Übersetzungsverhältnis gibt das Verhältnis der Drehzahl des Elektromotors zur Drehzahl der damit angetriebenen Achse an).

Gemäß einer anderen besonderen Ausführungsform des erfindungsgemäßen Einsatz- oder Nutzfahrzeugs erfolgt die Kraftübertragung von mehreren, insbesondere zwei, Elektromotoren zu einem Sammelgetriebe und von dort zu einem Verteilergetriebe, von dem aus mehrere Achsen des Fahrzeugs angetrieben werden. Hier sorgt das Verteilergetriebe für einen gleichmäßigen Kraftschluss an alle angetriebenen Achsen. Ansonsten gilt auch für diese Ausführungsform, dass bautechnisch kleinere, verhältnismäßig kostengünstige Elektromotoren verwendet werden können. Der Einsatz von wenigstens zwei Elektromotoren gewährleistet eine Ausfallsicherheit im Falle eines Defekts eines der Elektromotoren. Grundsätzlich gilt, dass die Steuertechnik für weniger Elektromotoren einfacher ist, sodass diese Ausführungsform einen sehr guten Kompromiss darstellt.

Eine Abwandlung dieser Ausführungsform sieht vor, dass wenigstens ein, vorzugsweise zwei Elektromotoren an einem Verteilergetriebe oder in unmittelbarer Nähe eines Verteilergetriebes montiert sind, wobei die Kraftübertragung von jedem Elektromotor zum Verteilergetriebe erfolgt, von dem aus mehrere Achsen des Fahrzeugs angetrieben werden. Diese Abwandlung hat die zusätzlichen Vorteile, dass die Anordnung der Elektromotoren am zentralen Verteilergetriebe für eine gute Gewichtsverteilung des Fahrzeugs sorgt und die Wege für die Einleitung der Drehmomente in das Verteilergetriebe kurz sind.

Auch hier kann für jeden Elektromotor ein Vorgelege zwischengeschaltet werden, um geeignete Übersetzungsverhältnisse bereitstellen. Die Vorgelege, an die die Elektromotoren gekoppelt sind, sind direkt am Verteilergetriebe montiert.

Wenn nicht alle Achsen des Fahrzeugs direkt oder über die Vorgelege von den Elektromotoren angetrieben werden, ist eine Ausführung der angetriebenen Achsen als Durchtriebsachsen vorteilhaft.

Die Leistung des bzw. der Elektromotoren zum Antreiben des Fahrzeugs liegt je nach Art des Fahrzeugs vorzugsweise im Bereich von 50 bis 750 KW, weiter vorzugsweise im Bereich von 100 bis 500 KW. In diesem Leistungsbereich sind bewährte Serienelektromotoren verfügbar, sodass keine Neuentwicklung erforderlich ist. Gemäß der bevorzugten Anwendung der Erfindung werden bei einem erfindungsgemäßen Flughafenlöschfahrzeug zwei oder vier solcher Serienelektromotoren mit einer Leistung im Bereich von 100 bis 300 KW eingesetzt, die heute bereits auf dem Markt verfügbar sind.

Zum Aufladen der Akkumulatoren kann der Verbrennungsmotor in einfacher Weise an einen elektrischen Generator gekoppelt werden, der die erzeugte elektrische Energie in die Akkumulatoren einspeist.

Hierzu ist keine besondere oder aufwendige mechanische Konstruktion notwendig. Die Motorwelle des Verbrennungsmotors kann nämlich sowohl an die Arbeitsmaschine als auch an den elektrischen Generator gekoppelt werden, wenn sie entsprechend gewählt ist. Alternativ ist der Generator an einen Nebenantrieb des Verbrennungsmotors gekoppelt.

Der bzw. die erfindungsgemäß vorgesehenen Akkumulatoren können entweder jeweils einem einzigen Elektromotor oder mehreren Elektromotoren zugeordnet sein, d.h. das Energieversorgungssystem kann ggf. geteilt werden.

Insbesondere im Falle eines auf einem Flughafen eingesetzten erfindungsgemäßen Einsatz- oder Nutzfahrzeugs ist eine Ausführungsform der Erfindung vorteilhaft, bei der der wenigstens eine Akkumulator oder ein zum Aufladen des Akkumulators verwendetes Steuergerät so ausgelegt ist, dass der Akkumulator auch mit 115 Volt / 400 Hz Wechselstrom aufladbar ist. Da diese Spannungsversorgung dem weltweit einheitlichen Standard auf Flughäfen entspricht, können zum Aufladen des Akkumulators des erfindungsgemäßen Einsatz- oder Nutzfahrzeuges auf dem Flughafen bereits vorhandene mobile Bodenstromaggregate (engl. Bodenstromaggregat, GPU) genutzt werden.

Weitere Merkmale und Vorteile der Erfindung ergeben sich aus der nachfolgenden Beschreibung und aus den beigefügten Zeichnungen, auf die Bezug genommen wird. In den Zeichnungen zeigen schematisch und mit Symboldarstellungen:
- Figur 1 ein Fahrgestell mit Komponenten eines herkömmlichen Flughafenlöschfahrzeugs in perspektivischer Ansicht;
- Figur 2 ein Fahrgestell mit Komponenten eines erfindungsgemäßen Flughafenlöschfahrzeugs nach einer ersten Ausführungsform in Seitenansicht;
- Figur 3 das Fahrgestell mit einem Teil der Komponenten aus Figur 2 in Draufsicht;
- Figur 4 einen anderen Teil der Komponenten aus Figur 2 in Draufsicht;
- Figur 5 ein Fahrgestell mit Komponenten eines erfindungsgemäßen Flughafenlöschfahrzeugs nach einer zweiten Ausführungsform in Seitenansicht;
- Figur 6 das Fahrgestell mit einem Teil der Komponenten aus Figur 5 in Draufsicht;
- Figur 7 einen anderen Teil der Komponenten aus Figur 5 in Draufsicht;
- Figur 8 ein Fahrgestell mit Komponenten eines erfindungsgemäßen Flughafenlöschfahrzeugs nach einer dritten Ausführungsform in Seitenansicht;
- Figur 9 das Fahrgestell mit einem Teil der Komponenten aus Figur 8 in Draufsicht; und
- Figur 10 einen anderen Teil der Komponenten aus Figur 8 in Draufsicht.

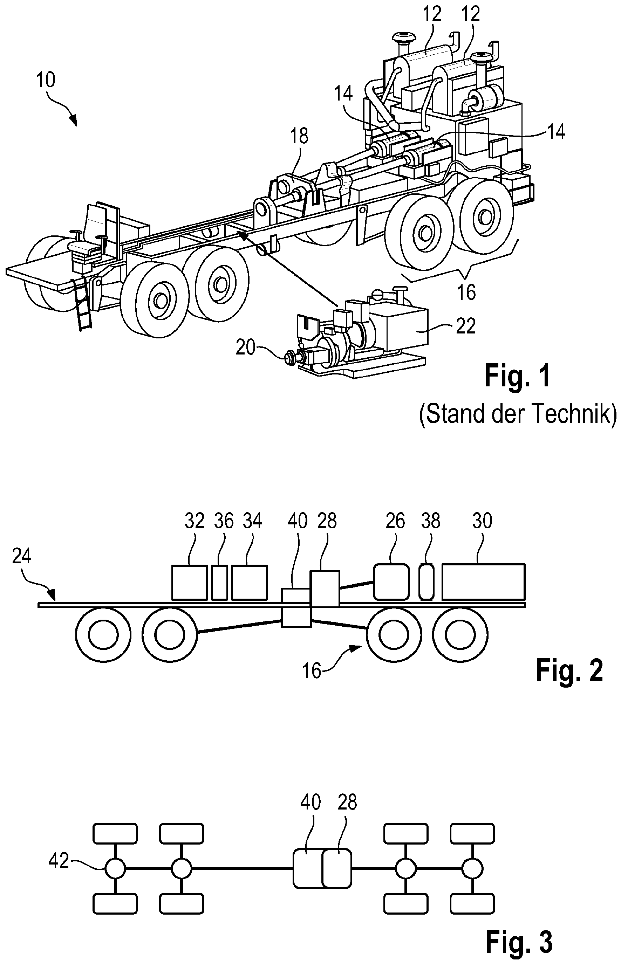

In Figur 1 ist beispielhaft ein Fahrgestell 10 eines heutigen Flughafenlöschfahrzeugs gezeigt. Zwei Dieselmotoren 12, die als Antriebsmotoren des Fahrzeugs dienen, sind ebenso wie zwei zugehörige Automatikgetriebe 14 im Heck 16 des Fahrzeugs angeordnet. Des Weiteren ist die Anordnung eines Sammelgetriebes 18 und einer Feuerlöschkreiselpumpe 20 gezeigt, die von einem weiteren Dieselmotor (Pumpenmotor) 22 angetrieben wird.

Bei dem in den Figuren 2 bis 4 gezeigten Fahrgestell 24 eines erfindungsgemäßen Flughafenlöschfahrzeugs nach einer ersten Ausführungsform sind anstelle der zwei Diesel-Antriebsmotoren zwei Serienelektromotoren 26 (Traktionsmotoren) vorgesehen. Die Leistung der Elektromotoren 26 liegt im Bereich von etwa 100 bis 300 kW. Von diesen Elektro-Antriebsmotoren 26 erfolgt die Kraftübertragung zu einem Sammelgetriebe 28 und einem Verteilergetriebe 40, von dem aus die Achsen des Fahrzeugs angetrieben werden.

Die elektrische Energie für die Elektro-Antriebsmotoren 26 wird von Akkumulatoren 30 zur Verfügung gestellt, deren Einbauort im Fahrzeugrahmen im Hinblick auf den Fahrzeugschwerpunkt relativ flexibel wählbar ist.

Um die Einsatzbereitschaft des Flughafenlöschfahrzeugs herzustellen, werden die Akkumulatoren 30 in der Fahrzeughalle, in der das Fahrzeug abgestellt ist, über die dort vorhandene Stromversorgung geladen (in Europa typischerweise Wechselstrom mit 230 Volt/50 Hz (Netzspannung) bzw. 400 Volt / 50 Hz (Dreiphasenwechselspannung)).

Die zum Aufladen der Akkumulatoren 30 verwendeten Steuergeräte 38, die zur Steuerung der entsprechenden Ladegeräte und Elektromotoren 26 vorgesehen sind, sind so ausgelegt, dass die Akkumulatoren 30 auch von herkömmlichen mobilen Bodenstromaggregaten aufgeladen werden können, die üblicherweise auf jedem größeren Flughafen vorgesehen sind. Solche Bodenstromaggregate liefern einem weltweit einheitlichen Standard zufolge Wechselstrom mit 115 Volt/400 Hz.

Des Weiteren ist der wie bei einem herkömmlichen Flughafenlöschfahrzeug vorhandene Dieselmotor (Pumpenmotor) 32 für den Antrieb der Feuerlöschkreiselpumpe 34 so ausgelegt, dass er über einen Nebenantrieb zusätzlich einen elektrischen Generator 36 zur Stromerzeugung antreiben kann, mit dem wiederum die Akkumulatoren 30 über das Steuergerät 38 aufgeladen werden können. Grundsätzlich ist es auch möglich, den Pumpenmotor 32 mit einer geeigneten Motorwelle zu versehen, sodass zusätzlich der elektrische Generator 36 an diese angekoppelt werden kann. Auf diese Weise ist ein Reichweitenverlängerer (Range Extender) realisiert.

Durch eine intelligente Steuerung können durch den elektrischen Generator 36 ein oder zwei Akkumulatoren 30 geladen werden. Bei einer Ausführungsform, bei der jeweils ein Akkumulator 30 jeweils einen Elektromotor 26 versorgt, ist hierdurch eine Ausfallsicherung realisiert. Wenn nämlich ein Elektromotor 26 oder ein Akkumulator 30 ausfällt, stehen immer noch der bzw. die anderen Elektromotoren 26 und Akkumulatoren 30 zur Verfügung.

Alternativ oder zusätzlich zu den Akkumulatoren 30 können grundsätzlich auch eine oder mehrere auf dem Einsatz- oder Nutzfahrzeug angeordnete Brennstoffzellen zur Energieversorgung der Elektro-Antriebsmotoren 26 vorgesehen sein.

Zusätzlich zu den Akkumulatoren 30 können Superkondensatoren eingebaut werden. Diese verbessern die Beschleunigung, da mehr Strom in kurzer Zeit fließen kann.

Im Falle eines Einsatzes fährt das Fahrzeug rein elektrisch los. Außerhalb der Fahrzeughalle wird der Pumpenmotor 32 gestartet. Eine Absaugung von Abgasen in der Fahrzeughalle ist also nicht erforderlich.

Abgesehen von der Nutzung zum Antreiben der Feuerlöschkreiselpumpe 34 kann der Pumpenmotor 32 während einer Wartezeit, während eines Einsatzes und/oder während der Rückfahrt zur Fahrzeughalle zusammen mit dem elektrischen Generator 36 zur Stromerzeugung genutzt werden, um die Akkumulatoren 30 wieder aufzuladen, soweit dies erforderlich oder sinnvoll ist.

Nachfolgend werden beispielhaft mögliche Betriebsarten des Flughafenlöschfahrzeugs kurz skizziert:
Betriebsart A: Flughafenlöschfahrzeug steht in Feuerwache (Fahrzeughalle); Einspeisung durch stationäres Netz (400 V / 50 Hz); beide Akkumulatoren 30 werden aufgeladen; weitere Verbraucher (Ladegerät von Handlampen, etc.) werden versorgt.
Betriebsart B: Start, Losfahren; Antriebs-Elektromotoren 26 werden von beiden Akkumulatoren 30 versorgt; Betriebselektrik wird von einem ersten der beiden Akkumulatoren 30 versorgt; Dieselmotor 22 für Feuerlöschkreiselpumpe 20 und Generator 36 werden erst außerhalb der Fahrzeughalle gestartet.
Betriebsart C: Fahrt mit maximaler Beschleunigung; Antriebs-Elektromotoren 26 werden von beiden Akkumulatoren 30 versorgt; Betriebselektrik wird vom ersten der beiden Akkumulatoren 30 versorgt; Dieselmotor 22 für Feuerlöschkreiselpumpe 20 und Generator 36 laufen.
Betriebsart D: Bremsen, kurz vor Einsatzstelle oder bei geringen Fahrgeschwindigkeiten; Antriebs-Elektromotoren 26 werden vom zweiten der beiden Akkumulatoren 30 versorgt; Betriebselektrik wird vom ersten der beiden Akkumulatoren 30 versorgt; Dieselmotor 22 für Feuerlöschkreiselpumpe 20 und Generator 36 laufen; Generator 36 lädt den ersten der beiden Akkumulatoren 30.
Betriebsart E: Löschvorgang, stehendes Fahrzeug; Betriebselektrik wird vom ersten der beiden Akkumulatoren 30 versorgt; Dieselmotor 22 für Feuerlöschkreiselpumpe 20 und Generator 36 laufen; Generator 36 lädt den ersten der beiden Akkumulatoren 30.
Betriebsart F: Löschfahrzeug, Fahrzeug bewegt sich langsam ("pump and roll"); Antriebs-Elektromotoren 26 werden vom zweiten der beiden Akkumulatoren 30 versorgt; Betriebselektrik wird vom ersten der beiden Akkumulatoren 30 versorgt; Dieselmotor 22 für Feuerlöschkreiselpumpe 20 und Generator 36 laufen; Generator 36 lädt den ersten der beiden Akkumulatoren 30.
Betriebsart G: Wartezeit; Betriebselektrik wird vom ersten der beiden Akkumulatoren 30 versorgt; Dieselmotor 22 für Feuerlöschkreiselpumpe 20 und Generator 36 laufen; Generator 36 lädt den ersten der beiden Akkumulatoren 30; sobald der erste Akkumulator 30 aufgeladen ist, wird der zweite Akkumulator 30 aufgeladen.
Betriebsart H: Lange Wartezeit; Betriebselektrik wird vom ersten der beiden Akkumulatoren 30 versorgt; Einspeisung durch Bodenstromaggregat (400 Volt / 115 Hz); sobald der erste Akkumulator 30 aufgeladen ist, wird der zweite Akkumulator 30 aufgeladen.
Betriebsart I: Rückfahrt, mit aufgeladenen Akkumulatoren 30; Antriebs-Elektromotoren 26 werden von beiden Akkumulatoren 30 versorgt; Betriebselektrik wird vom ersten der beiden Akkumulatoren 30 versorgt; Dieselmotor 22 für Feuerlöschkreiselpumpe 20 und Generator 36 laufen; Generator 36 lädt den ersten der beiden Akkumulatoren 30.
Betriebsart J: Rückfahrt, mit nur teilweise aufgeladenen Akkumulatoren 30; Antriebs-Elektromotoren 26 werden vom zweiten der beiden Akkumulatoren 30 versorgt; Betriebselektrik wird vom ersten der beiden Akkumulatoren 30 versorgt; Dieselmotor 22 für Feuerlöschkreiselpumpe 20 und Generator 36 laufen; Generator 36 lädt den zweiten der beiden Akkumulatoren 30.
Betriebsart K: Rückfahrt, Generator defekt, Akkus leer; fahrbares Bodenstromaggregat wird angehängt (Anhängekupplung) und mitgeführt bis zur Feuerwache, flexible Kabelverbindung zur Einspeisung; Einspeisung durch Bodenstromaggregat (400 Volt / 115 Hz).
Betriebsart L: Einfahrt in Fahrzeughalle; Elektromotoren zum Fahren werden von beiden Akkumulatoren 30 versorgt; Betriebselektrik wird vom ersten der beiden Akkumulatoren 30 versorgt; Dieselmotor 22 für Feuerlöschkreiselpumpe 20 und Generator 36 werden ausgeschaltet.

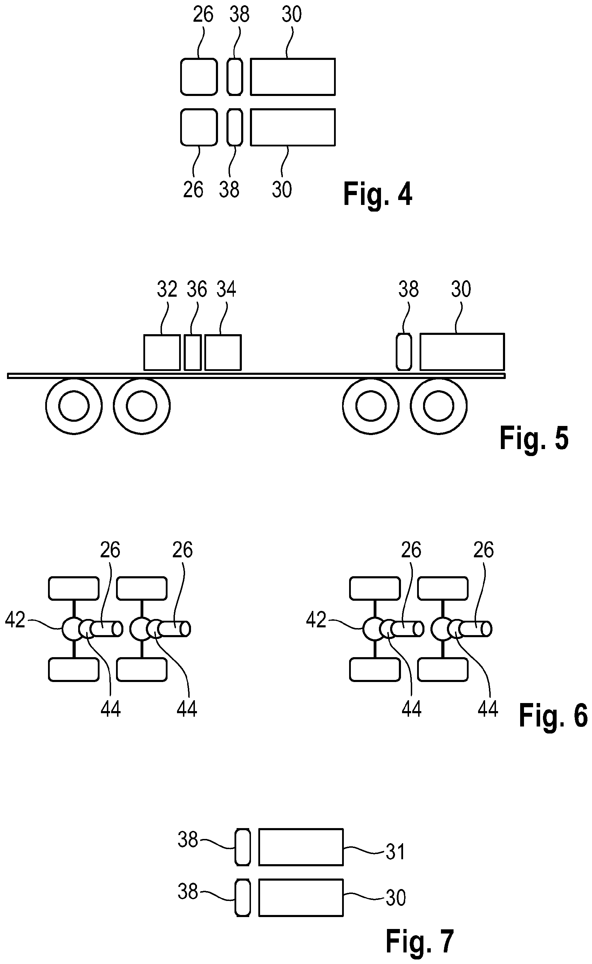

In den Figuren 5 bis 7 ist eine zweite Ausführungsform des Fahrgestells 24 für ein erfindungsgemäßes Flughafenlöschfahrzeug gezeigt. Im Unterschied zur ersten Ausführungsform ist hier für jede Achse des Fahrzeugs ein eigener Elektro-Antriebsmotor 26 vorgesehen, beispielsweise mit einer Leistung von ca. 300 kW.

An jede Achse bzw. jeden Achskörper 42 des Fahrgestells 24 ist ein sogenanntes Vorgelege 44 montiert, an welches wiederum der jeweilige Elektromotor 26 gekoppelt ist. Auf ein Sammel- und ein Verteilergetriebe kann bei dieser Ausführungsform verzichtet werden.

Das Vorgelege 44 dient jeweils zur Verringerung der vom Elektromotor 26 bereitgestellten Drehzahl und zur Erhöhung des vom Elektromotor 26 bereitgestellten Drehmoments. Mit dem Vorgelege 44 kann die Drehzahl insbesondere an zwei verschiedene Fahrbedingungen angepasst werden, nämlich die normale Fahrt auf ebenen Straßen einerseits und die Fahrt am Berg oder im weglosen Gelände andererseits. Ein geeignetes Übersetzungsverhältnis, d.h. das Verhältnis der Drehzahl des Elektromotors zur Drehzahl der angetriebenen Achse, beträgt beispielsweise i ∼ 3,5 für die Fahrt am Berg und i ∼ 1 für die ebene Fahrt mit einer vorgesehenen Endgeschwindigkeit. Durch die Vorgelege 44 ist sichergestellt, dass die geforderten Beschleunigungswerte und die geforderte Steigfähigkeit des Fahrzeugs auch bei voller Beladung erreicht werden.

Selbstverständlich ist es je nach Fahrzeugtyp nicht unbedingt zwingend notwendig, tatsächlich alle Achsen des Fahrzeugs mit einem Elektromotor 26 und einem Vorgelege 44 auszurüsten.

Die elektrische Energie für die Elektromotoren 26 wird wiederum von mehreren Akkumulatoren 30 zur Verfügung gestellt, deren Einbauort flexibel wählbar ist. Es kann jedem Elektromotor 26 ein eigener Akkumulator 30 zugeordnet sein, oder ein Akkumulator 30 versorgt mehrere Elektromotoren 26, beispielsweise zwei.

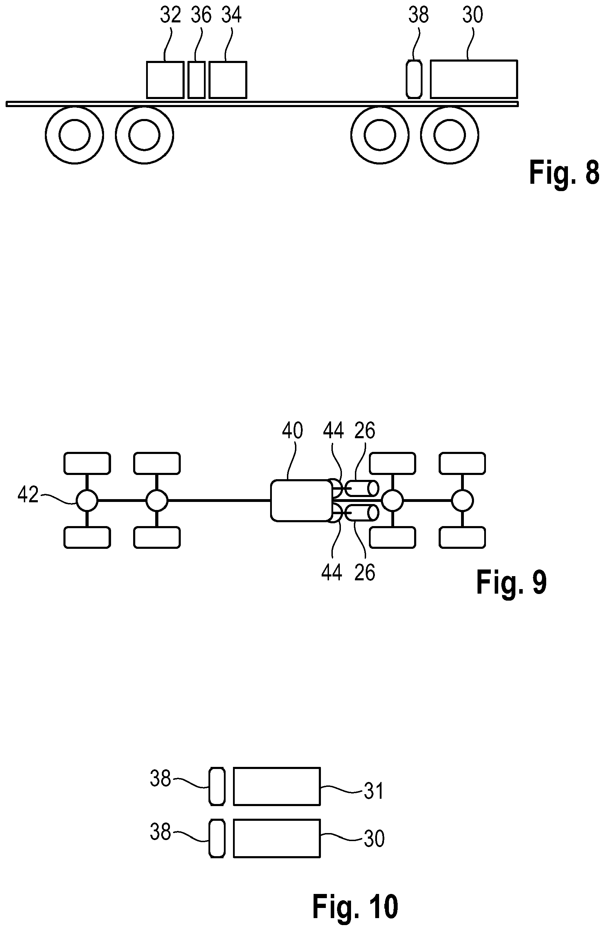

Eine dritte Ausführungsform des Fahrgestells 24 für ein erfindungsgemäßes Flughafenlöschfahrzeug ist in den Figuren 8 bis 10 gezeigt. Wie bei der ersten Ausführungsform ist hier ein Verteilergetriebe 40 vorgesehen, von dem aus die Achsen des Fahrzeugs angetrieben werden.

An das Verteilergetriebe 40 sind über mehrere (hier zwei) Antriebswellen jeweils ein Schaltgetriebe mit einem Vorgelege 44 mit geeignet einstellbaren Übersetzungsverhältnissen montiert. An das Vorgelege 44 ist jeweils ein Elektro-Antriebsmotor 26 mit einer Leistung von ca. 600 kW gekoppelt.

Über das Verteilergetriebe 40 erfolgt die Kraftübertragung an die Achsen des Fahrzeugs. Bei dem in den Figuren 8 bis 10 dargestellten Ausführungsbeispiel sind die zwei mittleren Achsen als Durchtriebsachsen ausgeführt.

Auch bei dieser Bauart ist sichergestellt, dass die geforderten Beschleunigungswerte und die geforderte Steigfähigkeit erreicht werden.

Wie bei der zweiten Ausführungsform kann jedem Elektromotor 26 ein eigener Akkumulator 30 zugeordnet sein, oder ein Akkumulator 30 versorgt mehrere Elektromotoren 26, insbesondere zwei.

Obwohl die Erfindung am Beispiel eines Flughafenlöschfahrzeugs beschrieben wurde, ist sie nicht auf diesen Fahrzeugtyp eingeschränkt, sondern kann bei verschiedenen Einsatz- oder Nutzfahrzeugen mit einer zusätzlichen Arbeitsmaschine Anwendung finden.

### Bezuaszeichenliste

- 10: Fahrgestell
- 12: Dieselmotor (Antriebsmotor)
- 14: Automatikgetriebe
- 16: Heck
- 18: Sammelgetriebe
- 20: Feuerlöschkreiselpumpe
- 22: Dieselmotor (Pumpenmotor)
- 24: Fahrgestell
- 26: Elektromotor
- 28: Sammelgetriebe
- 30: Akkumulator
- 32: Dieselmotor (Pumpenmotor)
- 34: Feuerlöschkreiselpumpe
- 36: Generator
- 38: Steuergerät
- 40: Verteilergetriebe
- 42: Achskörper
- 44: Vorgelege

## Patentansprüche

1. Einsatz- oder Nutzfahrzeug für ein räumlich begrenztes Einsatzgebiet, mit
wenigstens einem Elektromotor (26) zum Antreiben des Fahrzeugs,
wenigstens einem Akkumulator (30) zur Bereitstellung von elektrischer Energie für den Elektromotor (26), und
wenigstens einem Verbrennungsmotor (32), insbesondere einem Dieselmotor, zum Antreiben wenigstens einer dem Einsatz- oder Nutzfahrzeug zugeordneten Arbeitsmaschine (34),
wobei der Verbrennungsmotor (32) auch zum Aufladen des wenigstens einen Akkumulators (30) eingerichtet ist.

2. Einsatz- oder Nutzfahrzeug nach Anspruch 1, **dadurch gekennzeichnet, dass** das Einsatz- oder Nutzfahrzeug ein Flughafenlöschfahrzeug und die von dem Verbrennungsmotor (32) angetriebene Arbeitsmaschine (34) eine Feuerlöschkreiselpumpe ist.

3. Einsatz- oder Nutzfahrzeug nach Anspruch 1 oder 2, **dadurch gekennzeichnet, dass** mehrere, vorzugsweise alle, Achsen des Fahrzeugs jeweils von einem Elektromotor (26) angetrieben werden.

4. Einsatz- oder Nutzfahrzeug nach Anspruch 3, **dadurch gekennzeichnet, dass** die Elektromotoren (26) jeweils an einem Achskörper (42) oder in unmittelbarer Nähe des Achskörpers (42) montiert sind.

5. Einsatz- oder Nutzfahrzeug nach Anspruch 4, **dadurch gekennzeichnet, dass** an die Achskörper (42) jeweils ein Vorgelege (44) montiert ist und die Elektromotoren (26) jeweils an das Vorgelege (44) gekoppelt sind.

6. Einsatz- oder Nutzfahrzeug nach Anspruch 5, **dadurch gekennzeichnet, dass** die Vorgelege (44) jeweils wahlweise ein erstes Übersetzungsverhältnis von etwa 3,5 ± 1 und ein zweites Übersetzungsverhältnis von etwa 1 ± 0,5 bereitstellen, wobei das Übersetzungsverhältnis das Verhältnis der Drehzahl des Elektromotors (26) zur Drehzahl der angetriebenen Achse angibt.

7. Einsatz- oder Nutzfahrzeug nach Anspruch 1, **dadurch gekennzeichnet, dass** die Kraftübertragung von mehreren Elektromotoren (26) zu einem Sammelgetriebe (28) und von dort zu einem Verteilergetriebe (40) erfolgt, von dem aus mehrere Achsen des Fahrzeugs angetrieben werden.

8. Einsatz- oder Nutzfahrzeug nach Anspruch 1, **dadurch gekennzeichnet, dass** wenigstens ein, vorzugsweise zwei Elektromotoren (26) an einem Verteilergetriebe (40) oder in unmittelbarer Nähe eines Verteilergetriebes (40) montiert sind, wobei die Kraftübertragung von jedem Elektromotor (26) zum Verteilergetriebe (40) erfolgt, von dem aus mehrere Achsen des Fahrzeugs angetrieben werden.

9. Einsatz- oder Nutzfahrzeug nach Anspruch 8, **dadurch gekennzeichnet, dass** an das Verteilergetriebe (40) ein Vorgelege (44) für jeden Elektromotor (26) montiert ist, an das der jeweilige Elektromotor (26) gekoppelt ist.

10. Einsatz- oder Nutzfahrzeug nach Anspruch 8 oder 9, **dadurch gekennzeichnet, dass** wenigstens eine der Achsen des Fahrzeugs als Durchtriebsachse ausgeführt ist.

11. Einsatz- oder Nutzfahrzeug nach einem der vorhergehenden Ansprüche, **dadurch gekennzeichnet, dass** die Leistung des wenigstens einen Elektromotors (26) im Bereich von 50 bis 750 kW, vorzugsweise im Bereich von 100 bis 500 kW, liegt.

12. Einsatz- oder Nutzfahrzeug nach einem der vorhergehenden Ansprüche, **dadurch gekennzeichnet, dass** der Verbrennungsmotor (32) an einen elektrischen Generator (36) gekoppelt ist.

13. Einsatz- oder Nutzfahrzeug nach Anspruch 12, **dadurch gekennzeichnet, dass** der Verbrennungsmotor (32) eine Motorwelle aufweist, an die sowohl die Arbeitsmaschine (34) als auch der elektrische Generator (36) gekoppelt ist, oder dass der Verbrennungsmotor (32) einen Nebenantrieb aufweist, an den der elektrische Generator (36) gekoppelt ist.

14. Einsatz- oder Nutzfahrzeug nach einem der vorhergehenden Ansprüche, **dadurch gekennzeichnet, dass** der wenigstens eine Akkumulator (30) einem einzigen Elektromotor (26) oder mehreren Elektromotoren (26) zugeordnet ist.

15. Einsatz- oder Nutzfahrzeug nach einem der vorhergehenden Ansprüche, **dadurch gekennzeichnet, dass** der wenigstens eine Akkumulator (30) oder ein für das Aufladen des Akkumulators (30) verwendetes Steuergerät (38) so ausgelegt ist, dass der Akkumulator (30) mit 115 Volt / 400 Hz Wechselstrom aufladbar ist.
